# FASCICULE DE BREVET EUROPEEN

(11) **EP 2 706 753 B1**
(45) Date de publication et mention de la délivrance du brevet: **01.08.2018**
(21) Numéro de dépôt: 13183854.2
(22) Date de dépôt: 11.09.2013
(51) Int. Cl.: H04N 21/222, H04L 29/08, H04N 21/2225, H04N 21/231, H04N 21/258, H04N 21/6371, H04N 21/647, H04L 29/06, H04N 21/2385

(54) **Technique de traitement d'une requête de distribution de contenu**
Technik für die Verarbeitung eines Content Distribution Anfrage
Technique for processing a content distribution request

(30) Priorité: 11.09.2012 FR 1258511
(43) Date de publication de la demande: 12.03.2014
(73) Titulaire: Orange, 75015 Paris (FR)
(72) Inventeur: Bertrand, Gilles, 92130 ISSY-LES-MOULINEAUX (FR); Qian, Xiangjun, 342500 JIANGXI PROVINCE (CN)

(56) Documents cités:
- WO-A1-2010/057192
- WO-A1-2011/073707
- WO-A1-2012/034273
- JP-A- 2005 063 234
- US-A1- 2010 121 940
- US-A1- 2010 268 789

## Description

L'invention se situe dans le domaine de la distribution de contenus à des entités clientes. Plus précisément, l'invention concerne une technique de traitement mise en oeuvre par un dispositif de traitement pour traiter une requête de distribution d'un contenu émise par une entité cliente, en vue d'une sélection d'un réseau de distribution de contenus pour distribuer le contenu requis à l'entité cliente.

Afin d'améliorer les performances de distribution de contenus à des entités clientes, il est courant de regrouper des réseaux de distribution de contenus CDN, pour « Content Delivery Network », dans une fédération de réseaux de distribution de contenus. Une telle fédération a par exemple pour objectifs de mettre en oeuvre un partage de charge entre les différents réseaux de la fédération, de permettre un accès à un contenu indépendamment d'une localisation géographique de l'entité cliente ou bien encore d'assurer une redondance pour la distribution des contenus.

Par ailleurs, de nombreux fournisseurs de contenus utilisent plusieurs réseaux de distribution de contenus pour distribuer un même contenu, afin de mettre en concurrence les fournisseurs des réseaux de distribution de contenus. Ils constituent ainsi une fédération de réseaux de distribution de contenus et répartissent le trafic lié à leurs contenus sur les réseaux de cette fédération.

Une fédération de réseaux de distribution de contenus utilise une fonction de sélection pour acheminer une requête de distribution d'un contenu transmise par une entité cliente vers le réseau de distribution approprié au sein de la fédération. Lorsqu'on se place au niveau de l'entité cliente, la fédération constitue un réseau de distribution virtuel auquel l'entité cliente transmet une requête de distribution d'un contenu et reçoit en retour celui-ci. La fonction de sélection de réseau peut être centralisée ou distribuée. L'entité de sélection peut être située au sein d'un réseau de distribution ou bien externe.

Lorsqu'une entité cliente requiert une distribution d'un contenu, l'entité de sélection choisit un réseau de distribution pour cette entité cliente selon des règles prédéfinies. Il s'agit par exemple de règles liées à une localisation géographique de l'entité cliente ou bien de règles liées à un réseau d'accès par l'intermédiaire duquel l'entité cliente accède au service de distribution.

Le document de brevet US2011/0131290 décrit un procédé de sélection d'un réseau de distribution de contenus parmi une pluralité de tels réseaux en fonction d'une information relative à une localisation de l'entité cliente. Cette information est fournie par l'entité cliente dans sa requête d'accès à un contenu. Le réseau de distribution sélectionné est le plus proche de la localisation de l'entité cliente. Les performances de cette sélection ne sont toutefois pas complètement satisfaisantes. En effet, les performances lors de la distribution de contenu ne dépendent pas uniquement de la localisation de l'utilisateur mais également de la disponibilité du contenu dans le réseau de distribution.

La demande internationale publiée sous le numéro WO 2010/057192 décrit un procédé de traitement d'une requête pour un contenu émise par une entité cliente.

La demande internationale publiée sous le numéro WO 2012/034273 décrit dans un environnement « cloud » un système d'assignation de tâches, prenant en compte des valeurs de corrélation entre des tâches et des ressources de traitement de ces tâches.

Un des buts de l'invention est de remédier à des insuffisances/inconvénients de l'état de la technique et/ou d'y apporter des améliorations.

Selon un premier aspect, l'invention a pour objet un procédé de traitement d'une première requête de distribution d'un contenu émise par une première entité cliente, ledit procédé comprenant les étapes suivantes mises en oeuvre par un dispositif de traitement :
- une première étape d'obtention d'une région de localisation de l'entité cliente à partir d'une adresse de ladite entité ;
- une deuxième étape d'obtention d'informations de sélection pour au moins une sélection d'un réseau de distribution de contenus parmi une pluralité de réseaux de distribution de contenus effectuée antérieurement pour traiter une deuxième requête de distribution dudit contenu émise par une deuxième entité cliente localisée dans ladite région de localisation, lesdites informations de sélection comprenant un identifiant du réseau de distribution sélectionné et une estampille temporelle de ladite sélection antérieure ;
- pour ledit identifiant de réseau obtenu, une étape de détermination d'une donnée représentative d'une probabilité de présence dudit contenu dans une mémoire cache dudit réseau en fonction du temps écoulé depuis l'estampille temporelle, ladite donnée étant destinée à être utilisée pour sélectionner un réseau de distribution pour distribuer le contenu à destination de la première entité cliente.

Ainsi, le procédé de traitement améliore les performances du service de distribution de contenu en sélectionnant de préférence un réseau de distribution de contenus présentant une probabilité élevée d'avoir le contenu recherché mémorisé dans un de ses serveurs. Il est en effet connu de mettre en oeuvre dans un réseau de distribution de contenus une mémorisation d'un contenu distribué au niveau d'un ou de plusieurs serveurs du réseau, également appelée mise en cache. Cette mise en cache permet lors d'une distribution du contenu à une entité cliente de ne pas solliciter de nouveau le fournisseur du contenu. En prenant en compte lors de la sélection d'un réseau de distribution pour distribuer un contenu des sélections antérieures pour ce contenu, le procédé de traitement augmente la probabilité de disponibilité en cache du contenu et améliore ainsi la distribution du contenu.

En effet, selon la technique connue, basée uniquement sur une sélection en fonction de la localisation, l'entité de sélection peut acheminer la requête vers un réseau de distribution qui ne dispose pas de copie en cache du contenu recherché. Dans ce cas, le réseau de distribution du contenu va solliciter le fournisseur de contenus pour obtenir ce contenu, ce qui diminue la performance globale de la fédération de réseaux. D'autres réseaux de distribution de la fédération de réseaux étaient plus adaptés pour distribuer ce contenu. En déterminant des réseaux de distribution pour lesquels la probabilité de présence du contenu dans une mémoire cache est élevée et en sélectionnant ensuite un de ces réseaux, le procédé de traitement permet ainsi, pour les réseaux, de diminuer le trafic entre le fournisseur de contenus et les réseaux de distribution de la fédération, et, pour l'entité cliente, de diminuer une durée nécessaire à la distribution du contenu.

Il est ici souligné que la donnée représentative d'une probabilité de présence du contenu est prise en compte lors de la sélection seule ou en complément de techniques existantes, telles que la prise en compte par exemple de la localisation de l'entité cliente, d'un état de charge des réseaux de distribution ou de disfonctionnement des réseaux.

La sélection se basant sur des sélections antérieures du contenu, aucune interrogation des réseaux de distribution n'est nécessaire pour obtenir des informations relatives à la mise en cache des contenus. Ainsi, la mise en oeuvre du procédé de traitement ne nécessite pas de modifications au niveau des réseaux de distribution. Cette solution est complètement transparente pour les réseaux de distribution et indépendante de ceux-ci.

L'invention permet ainsi d'améliorer de façon significative les performances du service de distribution de contenus en termes de temps de téléchargement pour des contenus de popularité moyenne et d'accélérer la mise en cache des contenus de popularité élevée.

Les différents modes ou caractéristiques de réalisation mentionnés ci-après peuvent être ajoutés indépendamment ou en combinaison les uns avec les autres, aux étapes du procédé de traitement tel défini précédemment.

Selon une caractéristique particulière, un identifiant de système autonome auquel est rattachée la première entité cliente est obtenu lors de la première étape d'obtention et les informations de sélection sont obtenues pour une deuxième entité cliente rattachée à ce système autonome.

La prise en compte du système autonome permet d'améliorer les performances du procédé de traitement.

Selon encore une autre caractéristique particulière, un poids est associé à chaque sélection antérieure en fonction du temps écoulé depuis ladite estampille temporelle, ce poids variant inversement au temps écoulé.

L'association de poids aux sélections antérieures permet ainsi de déterminer simplement la donnée représentative d'une probabilité de présence et d'effectuer une comparaison entre plusieurs réseaux de distribution.

Dans un mode de réalisation particulier, pour chaque identifiant de réseau obtenu, cette donnée est déterminée en fonction des poids respectivement associés aux sélections antérieures dudit réseau obtenu.

La prise en compte de plusieurs sélections antérieures permet ainsi d'améliorer la précision de la donnée représentative d'une probabilité de présence.

Selon un deuxième aspect, l'invention concerne également un dispositif de traitement d'une première requête de distribution d'un contenu émise par une première entité cliente, comprenant :
- un premier module d'obtention, agencé pour obtenir à partir de l'adresse de ladite entité cliente une région de localisation ;
- un deuxième module d'obtention, agencé pour obtenir des informations de sélection pour au moins une sélection d'un réseau de distribution de contenus parmi une pluralité de réseaux de distribution de contenus effectuée antérieurement pour traiter une deuxième requête de distribution dudit contenu émise par une deuxième entité cliente localisée dans ladite région de localisation, lesdites informations de sélection comprenant un identifiant du réseau de distribution sélectionné et une estampille temporelle de ladite sélection antérieure ;
- un module de détermination, d'une donnée représentative d'une probabilité de présence dudit contenu dans une mémoire cache d'un réseau obtenu en fonction du temps écoulé depuis l'estampille temporelle, ladite donnée étant destinée à être utilisée pour sélectionner un réseau de distribution pour distribuer le contenu à destination de la première entité cliente.

Les avantages énoncés pour le procédé de traitement selon le premier aspect sont transposables directement au dispositif de traitement.

Selon une caractéristique particulière, le dispositif de traitement comprend en outre un module de sélection, agencé pour sélectionner un réseau de distribution pour distribuer le contenu à destination de la première entité cliente en fonction au moins de la données déterminée.

Selon un troisième aspect, l'invention concerne en outre un système de distribution de contenus, agencé pour distribuer un contenu à une première entité cliente l'ayant requis. Ce système comprend :
- un premier module d'obtention, agencé pour obtenir à partir de l'adresse de ladite entité cliente une région de localisation ;
- un deuxième module d'obtention, agencé pour obtenir des informations de sélection pour au moins une sélection d'un réseau de distribution de contenus parmi une pluralité de réseaux de distribution de contenus effectuée antérieurement pour traiter une deuxième requête de distribution dudit contenu émise par une deuxième entité cliente localisée dans ladite région de localisation, lesdites informations de sélection comprenant un identifiant du réseau de distribution sélectionné et une estampille temporelle de ladite sélection antérieure ;
- un module de détermination, d'une donnée représentative d'une probabilité de présence dudit contenu dans une mémoire cache d'un réseau obtenu en fonction du temps écoulé depuis l'estampille temporelle ;
- un module de sélection, agencé pour sélectionner un réseau de distribution pour distribuer le contenu à destination de la première entité cliente en fonction au moins de la données déterminée.

Les avantages énoncés pour le procédé de traitement selon le premier aspect sont transposables directement au système de distribution de contenus.

Selon un quatrième aspect, l'invention concerne un programme pour un dispositif de traitement, comprenant des instructions de code de programme destinées à commander l'exécution des étapes du procédé précédemment décrit, lorsque ledit programme est exécuté par ledit dispositif et un support d'enregistrement lisible par un dispositif de traitement sur lequel est enregistré un programme pour un dispositif.

La technique de traitement et par conséquent la technique de sélection seront mieux comprises à l'aide de la description suivante de modes de réalisation particuliers, en référence aux dessins annexés sur lesquels :
- la figure 1 représente dans son environnement un dispositif de sélection comprenant un dispositif de traitement selon un mode particulier de réalisation ;
- la figure 2a représente des étapes d'un procédé de sélection dans un mode particulier de réalisation ;
- les figures 2b et 2c représentent des étapes du procédé de traitement dans un mode particulier de réalisation ;
- la figure 3 illustre un enregistrement mémorisé dans une base de données dans un mode particulier de réalisation ;
- la figure 4a représente un dispositif de traitement selon un mode particulier de réalisation ;
- la figure 4b représente un dispositif de sélection selon un mode particulier de réalisation.

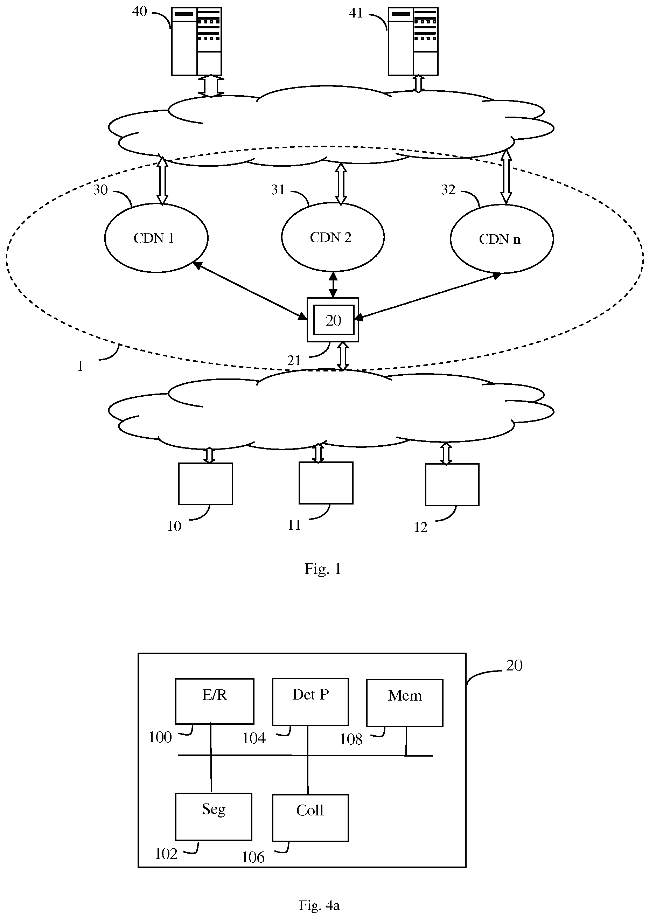

La figure 1 représente un dispositif de sélection 21 dans son environnement. Le dispositif de sélection 21 est apte à sélectionner un réseau de distribution de contenus parmi une pluralité de réseaux de distribution de contenus 30, 31, 32 lors de la réception d'une requête de distribution d'un contenu C en provenance d'une entité cliente 10, 11, 12. Les réseaux de distribution de contenus 30, 31, 32 forment une fédération de réseaux.

Les différents dispositifs ou entités sont reliés par l'intermédiaire de réseaux de communication, par exemple de type IP, pour « Internet Protocol ».

Aucune limitation n'est attachée au type de contenus. Il peut s'agir de contenus multimédias correspondant à tout ou partie d'un film, d'un morceau de musique, d'une image ou bien encore d'une page web.

Des services de distribution de contenus, par exemple de vidéo à la demande ou télévisuel, sont proposés aux entités clientes 10, 11, 12 par l'intermédiaire d'un portail, non représenté sur la figure 1. Un serveur d'origine mémorise des contenus proposés. Deux serveurs d'origine 40, 41 sont représentés sur la figure 1. Aucune limitation n'est attachée au nombre de serveurs d'origine. Aucune limitation n'est attachée à l'utilisation ou non d'un portail pour la fourniture du service de distribution de contenus.

Chaque réseau de distribution de contenus 30, 31, 32 CDN pour « Content Delivery Network » est constitué d'entités de distribution reliées en réseau, non représentées sur la figure 1. Au sein d'un réseau de distribution de contenus, les entités de distribution coopèrent pour mettre à disposition des contenus à des entités clientes. Un réseau de distribution de contenu peut également correspondre lui-même à une représentation virtuelle d'une fédération de réseaux de distributions de contenus.

Les réseaux de distribution de contenus 30, 31, 32 mémorisent de manière générale certains contenus dans des mémoires caches. Ces contenus peuvent y être mémorisés au préalable en fonction de choix des opérateurs de ces réseaux et/ou services ou d'accords entre ces opérateurs ou bien encore ultérieurement lors de leur distribution à une entité cliente à partir du serveur d'origine 40, 41. Lorsqu'une entité cliente 10 transmet une requête de distribution d'un contenu, cette dernière est reçue par une entité de distribution d'un réseau de distribution de contenus. Si cette entité de distribution ne dispose pas du contenu dans sa mémoire cache, elle l'obtient auprès d'une autre entité de distribution du réseau de distribution de contenus s'il est disponible dans la mémoire de cache de celle-ci. S'il n'est pas disponible dans le réseau de distribution, elle l'obtient directement auprès du serveur d'origine 40, 41. Dans les deux cas, elle peut le mémoriser dans sa propre mémoire cache lors de la distribution, pour une distribution ultérieure à une autre entité cliente. Ainsi, lorsque cette autre entité cliente transmet à son tour une requête de distribution du même contenu, elle peut obtenir le contenu directement à partir de la mémoire cache en réponse à la requête. Ceci permet à l'entité cliente de recevoir plus rapidement le contenu et de ne pas surcharger le réseau. En manière générale, les réseaux de distribution gèrent leurs mémoires caches à l'aide d'un algorithme de remplacement de données dépendant de l'utilisation des données (tel que LFU pour « Least Frequently Used »), conduisant ainsi à la mémorisation dans les mémoires caches des contenus populaires.

L'entité cliente 10, 11, 12 peut être tout type de terminal, tel qu'un terminal mobile, un ordinateur portable, un ordinateur, une tablette, ...

Les entités clientes 10, 11, 12 appartiennent à un système autonome, généralement sous contrôle d'une organisation unique, par exemple un fournisseur d'accès à Internet. Chaque système autonome est identifié par un numéro ASN de 16 bits ou de 32 bits, pour « Autonomous System Number ».

On se place par la suite dans le cas particulier où les requêtes de distribution sont conformes au protocole HTTP, pour « HyperText Transfert Protocol ». L'utilisation de ce protocole permet ainsi au dispositif de sélection 21 de rediriger après sélection la requête vers un réseau de distribution donné. Il est ici souligné que le protocole HTTP est donné à titre d'exemple non limitatif. Il est ainsi possible de mettre en oeuvre la distribution pour tout type de protocole, tel que le protocole RTSP (pour « Real Time Streaming Protocol »), etc.

Tel que représenté à la figure 1, le dispositif de sélection 21 comprend un dispositif de traitement 20. Il est ici souligné que ce dispositif de traitement 20 peut également être externe au dispositif de sélection 21 et coopérer avec ce dernier. Le dispositif de traitement 20 est notamment agencé pour déterminer une donnée représentative d'une probabilité de présence d'un contenu dans une mémoire cache dans un réseau en fonction d'un temps écoulé depuis une sélection antérieure. Cette donnée est destinée à être utilisée par le dispositif de sélection 21 pour sélectionner un réseau de distribution pour distribuer le contenu à une entité cliente requérante. Le dispositif de sélection comprend notamment un module de sélection, agencé pour sélectionner un réseau de distribution pour distribuer le contenu à destination de la première entité cliente en fonction au moins de cette données déterminée.

Nous allons maintenant décrire un dispositif de traitement 20 dans un mode particulier de réalisation en référence à la figure 4a. Un tel dispositif de traitement 20 est externe au dispositif de sélection 21.

Le dispositif de traitement 20 comprend notamment :
- un module 100 d'entrée/sortie, agencé pour communiquer avec le dispositif de sélection 21 et des bases de données externes ;
- un module 102 d'obtention d'une région de localisation, ou module de segmentation, agencé pour obtenir une région de localisation d'une entité cliente requérant un contenu, en fonction de l'adresse IP de celle-ci ;
- un module 104 de détermination d'une donnée représentative d'une probabilité d'une présence d'un contenu dans un réseau de distribution ;
- un module 106 d'obtention d'informations relatives à des sélections effectuées par le dispositif de sélection 21, également appelé module de collecte ;
- une base de données 108, agencée pour mémoriser des enregistrements, un enregistrement étant relatif à une sélection antérieure.

Le module 102 de segmentation interagit avec une base de données de géo-localisation, interne ou externe, associant à une adresse IP une région de localisation.

Dans un mode de réalisation particulier, le module 102 de segmentation est également agencé pour obtenir un identifiant de système autonome auquel est rattachée une entité cliente. Il interagit alors avec une base de données réseau, interne ou externe, associant à une adresse IP un identifiant de système autonome.

Ces deux critères, région de localisation et système autonome, correspondent de manière générale à des répartitions opérationnelles dans les réseaux de distribution de contenus. Les entités de distribution d'un réseau de distribution peuvent en effet être réparties de manière géographique ou en fonction des fournisseurs de service Internet.

L'utilisation de la région de localisation et/ou l'identifiant de système autonome peut ainsi apporter une information complémentaire quant à la présence ou non du contenu dans le réseau de distribution de contenus.

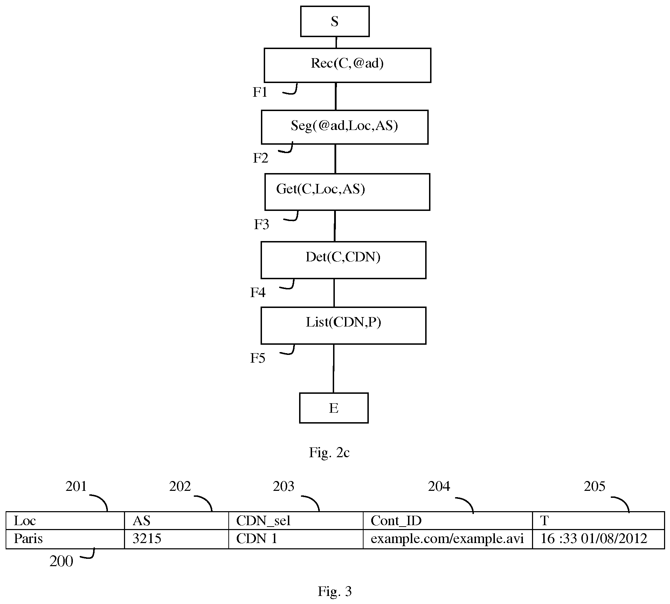

Un enregistrement mémorisé dans la base de données 108 est représenté à la figure 3. Un tel enregistrement 200 comprend pour une sélection antérieure effectuée pour une requête d'un contenu donné : une région de localisation 201 (« Paris »), un identifiant de système autonome 202 (« 3215 »), un identifiant 203 du réseau de distribution sélectionné (« CDN 1 »), un identifiant 204 du contenu (« example.com/example.avi ») et une estampille temporelle 205 de cette sélection antérieure (« 16 :33 01/08/2012 »). Par la suite, les informations de sélection pour une sélection antérieure correspondent à l'identifiant de réseau de distribution sélectionné et l'estampille temporelle.

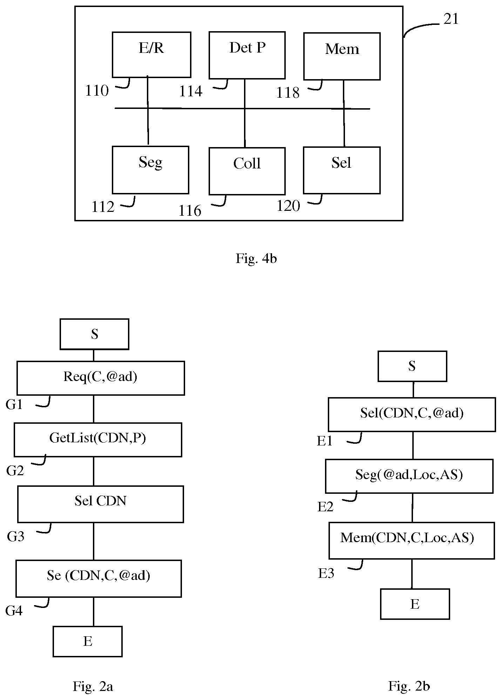

Nous allons maintenant décrire le procédé de sélection, tel qu'il est mis en oeuvre par le dispositif de sélection 21 dans un mode particulier de réalisation, en relation avec la figure 2a. Dans une étape préalable, non représentée sur la figure 2a, le dispositif de sélection est en attente de réception d'une requête de distribution de contenus.

Dans une étape G1, le dispositif de sélection 21 reçoit une requête de distribution d'un contenu C émise par une entité cliente 10.

Dans une étape G2, le dispositif de sélection 21 interroge le dispositif de traitement 20 pour obtenir une ou des données représentatives d'une probabilité de présence du contenu dans un réseau de distribution pour cette entité cliente 10 requérante. Plus précisément, le dispositif de sélection 21 transmet au dispositif de traitement 20 par exemple la requête reçue et l'adresse IP de l'entité cliente 10. Toujours dans cette étape G2, le dispositif de sélection 21 reçoit en retour une liste d'au moins un réseau de distribution et pour chaque réseau de distribution de la liste, une donnée représentative de la probabilité de présence du contenu dans une mémoire cache de celui-ci.

Dans une étape G3, le dispositif de sélection 21 sélectionne un réseau de distribution parmi les réseaux de distribution 30-32 en prenant en compte la ou les données représentatives de la probabilité de présence du contenu reçues à l'étape G2. Dans un mode de réalisation particulier, le dispositif de sélection 21 sélectionne dans une première phase un ensemble de réseaux de distribution en fonction de la région de localisation à partir de laquelle l'entité cliente requérante 10 accède. Puis, dans une deuxième phase, le dispositif de sélection 21 détermine un réseau de distribution de cet ensemble pour lequel la donnée représentative de la probabilité de présence est la plus élevée. Le réseau de distribution ainsi déterminé devient le réseau de distribution sélectionné. L'entité cliente 10 est alors redirigée vers ce réseau de distribution sélectionné.

Dans une étape G4, le dispositif de sélection 21 transmet au dispositif de traitement 20 les informations relatives à la sélection effectuée à l'étape G3, c'est-à-dire le réseau de distribution sélectionné, l'identifiant du contenu et l'adresse IP de l'entité cliente 10. La sélection effectuée lors de l'étape G3 correspond alors à une sélection antérieure au sens de la présente description.

Le procédé de sélection repasse à l'étape préalable, en attente de réception d'une requête de distribution d'un contenu.

Nous allons maintenant décrire le procédé de traitement, tel qu'il est mis en oeuvre par le dispositif de traitement 20 dans un mode particulier de réalisation, en relation avec les figures 2b et 2c.

Dans une étape préalable, non représentée sur les figures 2b et 2c, le dispositif de traitement 20 est en attente de détection d'évènement.

La figure 2b décrit plus précisément les étapes du procédé de traitement mises en oeuvre par le module de collecte 106 du dispositif de traitement 20, sur réception en provenance du dispositif de sélection 21 des informations relatives à une sélection antérieure. On rappelle que ces informations sont transmises par le dispositif de sélection 21 à l'étape G3 du procédé de sélection.

Dans une étape E1, le module de collecte 106 reçoit (par l'intermédiaire du module 100 d'entrée/sortie dans ce mode de réalisation) pour une sélection antérieure, le réseau de distribution sélectionné, l'identifiant du contenu et l'adresse IP de l'entité cliente 10. Le module de collecte 106 horodate cette sélection antérieure, c'est-à-dire y associe une estampille temporelle correspondant à l'instant de réception.

Dans une étape E2, le module de collecte 106 transmet au module de segmentation 102 l'adresse IP reçue pour obtenir en retour une région de localisation de l'entité cliente 10. Dans un mode de réalisation particulier, l'identifiant de système autonome est également transmis en retour.

Dans une étape E3, le module de collecte 106 mémorise dans la base de données 108 sous la forme d'un enregistrement 200 associé à la sélection antérieure, la région de localisation 201 et l'identifiant de système autonome 202 obtenus à l'étape E2, l'identifiant 203 du réseau de distribution sélectionné et l'identifiant 204 du contenu reçus à l'étape El et l'estampille temporelle 205 associée à l'étape E1.

Le procédé de traitement repasse ensuite à l'étape préalable, en attente de détection d'un événement.

La figure 2c décrit plus précisément les étapes du procédé de traitement mises en oeuvre par le module de détermination 104 du dispositif de traitement 20, lors d'une interrogation par le dispositif de sélection 21 pour une requête de distribution d'un contenu C émise par une entité cliente 11 et une adresse IP de cette dernière. On rappelle que ces informations sont transmises par le dispositif de sélection 21 à l'étape G2 du procédé de sélection.

Dans une étape F1, le module de détermination 104 reçoit (par l'intermédiaire du module 100 d'entrée/sortie dans ce mode de réalisation) les informations relatives à cette requête, notamment le contenu recherché C et l'adresse IP de l'entité cliente 11. Ces informations sont reçues à une estampille temporelle courante.

Dans une étape F2, le module de détermination 104 transmet au module de segmentation 102 l'adresse IP reçue pour obtenir en retour une région de localisation de l'entité cliente 11. Dans un mode de réalisation particulier, l'identifiant de système autonome est également transmis en retour.

Dans une étape F3, le module de détermination 104 interroge la base de données 108 pour obtenir des informations de sélection pour au moins une sélection effectuée antérieurement par le dispositif de sélection 21 pour ce contenu et cette région de localisation. Plus précisément, le module de détermination 104 obtient en retour le ou les enregistrements 200 mémorisés dans la base de données 108, correspondant à l'identifiant de ce contenu et à la région de localisation. Dans un mode de réalisation particulier, le ou les enregistrements comprennent également comme identifiant de système autonome l'identifiant de système autonome obtenu à l'étape F2 pour l'entité cliente 11.

Dans une étape F4, le module de détermination 104 détermine, pour un identifiant de réseau obtenu à l'étape F3, une donnée représentative d'une probabilité de présence de ce contenu dans une mémoire cache de ce réseau en fonction du temps écoulé entre l'estampille temporelle 205 de cette sélection antérieure et l'estampille temporelle courante. Lorsque le temps écoulé depuis une sélection antérieure est faible, c'est-à-dire qu'une entité de distribution a distribué le contenu récemment, la probabilité de présence du contenu dans une mémoire cache de l'entité de distribution est plus élevée. Ceci est cohérent avec les algorithmes de remplacement des données dans les mémoires caches, dans lesquels la décision de remplacement dépend d'une utilisation des données.

Dans une étape F5, le module de détermination 104 transmet à destination du dispositif de sélection 21 au moins un identifiant de réseau de distribution et pour ce réseau de distribution identifié, la donnée représentative d'une probabilité de présence du contenu.

Le procédé de traitement repasse ensuite à l'étape préalable, en attente de détection d'un événement.

Dans un mode de réalisation particulier, l'étape F4 est mise en oeuvre pour chaque identifiant de réseau de distribution présent dans un enregistrement obtenu à l'étape F3. Ceci permet au dispositif de sélection 21 d'appliquer d'autres critères en complément des données représentatives d'une probabilité de présence pour sélectionner un réseau de distribution.

Dans un mode de réalisation particulier, à l'étape F4, le module de détermination 104 détermine la donnée représentative à partir de l'enregistrement le plus récent.

Alternativement, lorsque plusieurs enregistrements sont reçus pour un même identifiant de réseau de distribution, à l'étape F4, le module de détermination 104 détermine la donnée à partir de l'ensemble de ces enregistrements. Ceci permet également de prendre en compte un nombre de distribution du contenu par ce réseau de distribution. La probabilité de présence du contenu dans une mémoire cache du réseau de distribution dépend ainsi du nombre de sélections antérieures et de leurs anciennetés.

Dans un mode de réalisation particulier, un poids est associé à une sélection antérieure en fonction du temps écoulé depuis cette sélection antérieure, ce poids variant en sens inverse du temps écoulé. Un poids élevé correspond ainsi à un temps écoulé faible. La probabilité de présence du contenu dans un réseau de distribution est en effet plus élevée lorsque le temps écoulé est faible. Ainsi, le poids associé correspond à la donnée représentative de la probabilité de présence. Lorsque plusieurs enregistrements sont obtenus pour un même identifiant de réseau de distribution, les poids sont alors cumulés pour former la donnée représentative.

Tout type de fonction peut être utilisé pour faire correspondre un poids à une durée. Il peut s'agir d'une fonction linéaire décroissante, d'une fonction inversement proportionnelle à la durée ou bien encore d'une fonction décroissant de manière exponentielle. Aucune limitation n'est attachée à cette fonction.

Un exemple est plus particulièrement décrit ci-après afin d'illustrer les différentes étapes des procédés dans un des modes de réalisation particuliers.

A l'étape F3, le module de détermination 104 obtient pour le contenu C et la région de localisation, les enregistrements suivants représentés de manière simplifiée sous la forme d'un tableau :

| Identifiant de requête | CDN Choisi | Temps écoulé (ms) |
|---|---|---|
| 1 | CDN 1 | 4012 |
| 2 | CDN 1 | 30086 |
| 3 | CDN 1 | 25000 |
| 4 | CDN 2 | 15540 |
| 5 | CDN 3 | 60410 |

Une fonction affecte un poids en fonction du temps écoulé, par exemple :
- poids à 3 pour un temps écoulé inférieur à 5 secondes ;
- poids à 2 pour un temps écoulé compris entre 5 et 15 secondes ;
- poids à 1 pour un temps écoulé compris entre 15 et 30 secondes ;
- poids à 0 au-delà.

Ainsi, pour les enregistrements de l'exemple illustratif représentés dans le tableau :
- au réseau de distribution CDN 1 sont associés trois enregistrements de poids respectifs 3, 0 et 1 ;
- au réseau de distribution CDN 2 est associé un seul enregistrement de poids 1 ;
- au réseau de distribution CDN 3 est associé un seul enregistrement de poids 0.

Un poids cumulé de 4 est ainsi associé au réseau de distribution CDN 1.

Une deuxième fonction associe un poids avec une donnée représentative d'une probabilité de présence du contenu dans une mémoire cache du réseau. A titre d'exemple illustratif :
- pour un poids supérieur à 5, la donnée est de 1 ;
- pour un poids inférieur à 5, la donnée est obtenue par une application linéaire de coefficient 0.2, soit D=0.2 * P, avec D la donnée et P le poids.

Ainsi, le dispositif de traitement 20 transmet à l'étape F5 au dispositif de sélection 21 les couples suivants :
(CDN 1, 0.8), (CDN 2 ; 0.1), (CDN 3, 0).

Le dispositif de sélection 21 prend ensuite en compte ces données représentatives d'une probabilité de présence du contenu dans une mémoire cache pour sélectionner un réseau de distribution. Il peut soit baser son choix uniquement sur ces informations, soit combiner ces informations avec d'autres critères de sélection. Ceci lui permet d'améliorer la sélection quand plusieurs réseaux de distribution sont sélectionnés selon ces critères de sélection.

Dans l'exemple illustratif, le réseau de distribution CDN 1 est sélectionné, lorsque le dispositif de sélection 21 base son choix uniquement sur ces données.

Les procédés de traitement et de sélection ont été décrits sous la forme de deux procédés coopérant entre eux. Dans un mode de réalisation particulier, le dispositif de sélection 21 comprend le dispositif de traitement 20. Dans ce cas, les étapes du procédé de traitement correspondent à des étapes du procédé de sélection. Le procédé de sélection mis en oeuvre par le dispositif de sélection comprend alors :
- une étape G1 de réception d'une première requête de distribution d'un contenu émise par une première entité cliente
- une première étape d'obtention F2 d'une région de localisation de l'entité cliente ;
- une deuxième étape d'obtention F3 d'informations de sélection pour au moins une sélection effectuée antérieurement par le dispositif de sélection pour traiter une deuxième requête de distribution de ce contenu émise par une deuxième entité cliente localisée dans ladite région de localisation, ces informations de sélection comprenant un identifiant du réseau de distribution sélectionné et une estampille temporelle de cette sélection antérieure ;
- pour un identifiant de réseau obtenu, une étape de détermination F4 d'une donnée représentative d'une probabilité de présence de ce contenu dans une mémoire cache de ce réseau en fonction du temps écoulé depuis l'estampille temporelle,
- une étape de sélection G3 d'un réseau de distribution parmi une pluralité de réseaux de distribution de contenus 30-32 en fonction de cette donnée.

Nous allons maintenant décrire un dispositif de sélection 21 dans ce mode particulier de réalisation en référence à la figure 4b. Le dispositif de sélection 21 comprend notamment :
- un module 200 d'entrée/sortie, agencé pour communiquer avec les entités clientes et des bases de données externes ;
- un module 202 d'obtention d'une région de localisation similaire au module 102 décrit précédemment en relation avec le dispositif de traitement 20 ;
- un module 204 de détermination d'une donnée représentative d'une probabilité d'une présence d'un contenu dans un réseau de distribution similaire au module 104 décrit précédemment en relation avec le dispositif de traitement 20 ;
- un module 206 d'obtention d'informations relatives à des sélections antérieures similaire au module 106 décrit précédemment en relation avec le dispositif de traitement 20 ;
- une base de données 208 similaire à la base de données 108 décrite précédemment en relation avec le dispositif de traitement 20 ;
- un module 210 de sélection, agencé pour sélectionner un réseau de distribution pour distribuer le contenu à destination de la première entité cliente en fonction au moins de la données déterminée.

Les procédés de traitement et de sélection sont mis en oeuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en oeuvre une fonction ou un ensemble de fonctions, selon ce qui est décrit précédemment pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou non, avec ou sans processeur intégré pour l'exécution de logiciel. Il s'agit par exemple d'un circuit intégré, d'une carte à puce, d'une carte électronique pour l'exécution d'un micrologiciel (firmware), etc.

Dans un mode de réalisation particulier, les modules 102, 104, 106 sont agencés pour mettre en oeuvre le procédé de traitement précédemment décrit. Il s'agit de préférence de modules logiciels comprenant des instructions logicielles pour faire exécuter les étapes du procédé précédemment décrit, mises en oeuvre par le dispositif de traitement 20. L'invention concerne donc aussi :
- un programme d'ordinateur pour un dispositif de traitement, comprenant des instructions de code de programme destinées à commander l'exécution des étapes du procédé précédemment décrit, lorsque ledit programme est exécuté par ce dispositif ;
- un support d'enregistrement lisible par un dispositif de traitement sur lequel est enregistré le programme pour dispositif.

Dans un mode de réalisation particulier, les modules 202, 204, 206, 220 sont agencés pour mettre en oeuvre le procédé de sélection précédemment décrits. Il s'agit de préférence de modules logiciels comprenant des instructions logicielles pour faire exécuter les étapes du procédé précédemment décrit, mises en oeuvre par le dispositif de sélection 21. L'invention concerne donc aussi :
- un programme d'ordinateur pour un dispositif de sélection, comprenant des instructions de code de programme destinées à commander l'exécution des étapes du procédé précédemment décrit, lorsque ledit programme est exécuté par ce dispositif ;
- un support d'enregistrement lisible par un dispositif de sélection sur lequel est enregistré le programme pour dispositif.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

L'invention concerne également un système de distribution 1 de contenus composé de réseaux de distribution de contenus, comprenant un dispositif de traitement 20 et/ou un dispositif de sélection 21 tels que décrits précédemment.

## Revendications

1. Procédé de traitement d'une première requête de distribution d'un contenu émise par une première entité cliente (10), ledit procédé comprenant les étapes suivantes mises en oeuvre par un dispositif de traitement (20) :
- une première étape d'obtention (F2) d'une région de localisation de l'entité cliente à partir d'une adresse de ladite entité ;
- une deuxième étape d'obtention (F3) d'informations de sélection pour au moins une sélection d'un réseau de distribution de contenus parmi une pluralité de réseaux de distribution de contenus (30-32) effectuée antérieurement pour traiter une deuxième requête de distribution dudit contenu émise par une deuxième entité cliente localisée dans ladite région de localisation, lesdites informations de sélection comprenant un identifiant du réseau de distribution sélectionné et une estampille temporelle de ladite sélection antérieure ;
- pour ledit identifiant de réseau obtenu, une étape de détermination (F4) d'une donnée représentative d'une probabilité de présence dudit contenu dans une mémoire cache dudit réseau en fonction du temps écoulé depuis l'estampille temporelle, ladite donnée étant utilisée pour sélectionner un réseau de distribution pour distribuer le contenu à destination de la première entité cliente.

2. Procédé selon la revendication 1, dans lequel un identifiant de système autonome auquel est rattachée la première entité cliente est obtenu lors de la première étape d'obtention et les informations de sélection sont obtenues pour une deuxième entité cliente rattachée audit système autonome.

3. Procédé selon la revendication 1, dans lequel un poids est associé à chaque sélection antérieure en fonction du temps écoulé depuis ladite estampille temporelle, ledit poids variant inversement au temps écoulé.

4. Procédé selon la revendication 3, dans lequel pour chaque identifiant de réseau obtenu, ladite donnée est déterminée en fonction des poids respectivement associés aux sélections antérieures dudit réseau obtenu.

5. Dispositif de traitement (20) d'une première requête de distribution d'un contenu émise par une première entité cliente (10), comprenant :
- un premier module d'obtention (102), agencé pour obtenir à partir de l'adresse de ladite entité cliente une région de localisation ;
- un deuxième module d'obtention (106), agencé pour obtenir des informations de sélection pour au moins une sélection d'un réseau de distribution de contenus parmi une pluralité de réseaux de distribution de contenus (30-32) effectuée antérieurement pour traiter une deuxième requête de distribution dudit contenu émise par une deuxième entité cliente localisée dans ladite région de localisation, lesdites informations de sélection comprenant un identifiant du réseau de distribution sélectionné et une estampille temporelle de ladite sélection antérieure ;
- un module de détermination (104), d'une donnée représentative d'une probabilité de présence dudit contenu dans une mémoire cache d'un réseau obtenu en fonction du temps écoulé depuis l'estampille temporelle, ladite donnée étant utilisée pour sélectionner un réseau de distribution pour distribuer le contenu à destination de la première entité cliente.

6. Dispositif de traitement selon la revendication 5, comprenant en outre un module de sélection, agencé pour sélectionner un réseau de distribution pour distribuer le contenu à destination de la première entité cliente en fonction au moins de la données déterminée.

7. Système (1) de distribution de contenus, agencé pour distribuer un contenu à une première entité cliente l'ayant requis, ledit système comprenant :
- un premier module d'obtention (102), agencé pour obtenir à partir de l'adresse de ladite entité cliente une région de localisation ;
- un deuxième module d'obtention (106), agencé pour obtenir des informations de sélection pour au moins une sélection d'un réseau de distribution de contenus parmi une pluralité de réseaux de distribution de contenus (30-32) effectuée antérieurement pour traiter une deuxième requête de distribution dudit contenu émise par une deuxième entité cliente localisée dans ladite région de localisation, lesdites informations de sélection comprenant un identifiant du réseau de distribution sélectionné et une estampille temporelle de ladite sélection antérieure ;
- un module de détermination (104), d'une donnée représentative d'une probabilité de présence dudit contenu dans une mémoire cache d'un réseau obtenu en fonction du temps écoulé depuis l'estampille temporelle ;
- un module de sélection (220), agencé pour sélectionner un réseau de distribution pour distribuer le contenu à destination de la première entité cliente en fonction au moins de la donnée déterminée.

8. Programme pour un dispositif de traitement, comprenant des instructions de code de programme destinées à commander l'exécution des étapes du procédé selon l'une des revendications 1 à 4, lorsque ledit programme est exécuté par ledit dispositif selon la revendication 5.

9. Support d'enregistrement lisible par un dispositif de traitement sur lequel est enregistré le programme selon la revendication 8.

## Patentansprüche

1. Verfahren zur Verarbeitung einer ersten Anforderung zur Verteilung eines Inhalts, die von einer ersten Client-Entität (10) gesendet wurde, wobei das Verfahren die folgenden Schritte umfasst, die von einer Verarbeitungsvorrichtung (20) durchgeführt werden:
- einen ersten Schritt der Gewinnung (F2) eines Standortbereichs der Client-Entität aus einer Adresse der Entität;
- einen zweiten Schritt der Gewinnung (F3) von Auswahlinformationen für wenigstens eine Auswahl eines Inhaltsverteilungsnetzes aus mehreren Inhaltsverteilungsnetzen (30-32), die zuvor vorgenommen wurde, um eine zweite Anforderung zur Verteilung des Inhalts zu verarbeiten, die von einer zweiten Client-Entität gesendet wurde, die sich in dem Standortbereich befindet, wobei die Auswahlinformationen eine Kennung des ausgewählten Verteilungsnetzes und einen Zeitstempel der früheren Auswahl umfassen;
- für die gewonnene Netzkennung, einen Schritt der Bestimmung (F4) einer Größe, die für eine Wahrscheinlichkeit des Vorhandenseins des Inhalts in einem Cache-Speicher des Netzes repräsentativ ist, in Abhängigkeit von der seit dem Zeitstempel vergangenen Zeit, wobei diese Größe verwendet wird, um ein Verteilungsnetz auszuwählen, um den Inhalt an die erste Client-Entität zu verteilen.

2. Verfahren nach Anspruch 1, wobei eine Kennung eines autonomen Systems, dem die erste Client-Entität zugeordnet ist, während des ersten Gewinnungsschrittes gewonnen wird und die Auswahlinformationen für eine zweite Client-Entität gewonnen werden, die dem autonomen System zugeordnet ist.

3. Verfahren nach Anspruch 1, wobei jeder früheren Auswahl in Abhängigkeit von der seit dem Zeitstempel vergangenen Zeit ein Gewicht zugeordnet wird, wobei sich das Gewicht umgekehrt zur vergangenen Zeit ändert.

4. Verfahren nach Anspruch 3, wobei für jede gewonnene Netzkennung die Größe in Abhängigkeit von den Gewichten bestimmt wird, die den früheren Auswahlen des gewonnenen Netzes jeweils zugeordnet sind.

5. Vorrichtung zur Verarbeitung (20) einer ersten Anforderung zur Verteilung eines Inhalts, die von einer ersten Client-Entität (10) gesendet wurde, umfassend:
- ein erstes Gewinnungsmodul (102), das dafür ausgelegt ist, aus der Adresse der Client-Entität einen Standortbereich zu gewinnen;
- ein zweites Gewinnungsmodul (106), das dafür ausgelegt ist, Auswahlinformationen für wenigstens eine Auswahl eines Inhaltsverteilungsnetzes aus mehreren Inhaltsverteilungsnetzen (30-32) zu gewinnen, die zuvor vorgenommen wurde, um eine zweite Anforderung zur Verteilung des Inhalts zu verarbeiten, die von einer zweiten Client-Entität gesendet wurde, die sich in dem Standortbereich befindet, wobei die Auswahlinformationen eine Kennung des ausgewählten Verteilungsnetzes und einen Zeitstempel der früheren Auswahl umfassen;
- ein Modul zur Bestimmung (104) einer Größe, die für eine Wahrscheinlichkeit des Vorhandenseins des Inhalts in einem Cache-Speicher eines in Abhängigkeit von der seit dem Zeitstempel vergangenen Zeit gewonnenen Netzes repräsentativ ist, wobei diese Größe verwendet wird, um ein Verteilungsnetz auszuwählen, um den Inhalt an die erste Client-Entität zu verteilen.

6. Vorrichtung zur Verarbeitung nach Anspruch 5, welche außerdem ein Auswahlmodul umfasst, das dafür ausgelegt ist, ein Verteilungsnetz auszuwählen, um den Inhalt in Abhängigkeit von wenigstens der bestimmten Größe an die erste Client-Entität zu verteilen.

7. System (1) zur Verteilung von Inhalten, welches dafür ausgelegt ist, einen Inhalt an eine erste Client-Entität, die ihn angefordert hat, zu verteilen, wobei das System umfasst:
- ein erstes Gewinnungsmodul (102), das dafür ausgelegt ist, aus der Adresse der Client-Entität einen Standortbereich zu gewinnen;
- ein zweites Gewinnungsmodul (106), das dafür ausgelegt ist, Auswahlinformationen für wenigstens eine Auswahl eines Inhaltsverteilungsnetzes aus mehreren Inhaltsverteilungsnetzen (30-32) zu gewinnen, die zuvor vorgenommen wurde, um eine zweite Anforderung zur Verteilung des Inhalts zu verarbeiten, die von einer zweiten Client-Entität gesendet wurde, die sich in dem Standortbereich befindet, wobei die Auswahlinformationen eine Kennung des ausgewählten Verteilungsnetzes und einen Zeitstempel der früheren Auswahl umfassen;
- ein Modul zur Bestimmung (104) einer Größe, die für eine Wahrscheinlichkeit des Vorhandenseins des Inhalts in einem Cache-Speicher eines in Abhängigkeit von der seit dem Zeitstempel vergangenen Zeit gewonnenen Netzes repräsentativ ist;
- ein Auswahlmodul (220), das dafür ausgelegt ist, ein Verteilungsnetz auszuwählen, um den Inhalt in Abhängigkeit von wenigstens der bestimmten Größe an die erste Client-Entität zu verteilen.

8. Programm für eine Vorrichtung zur Verarbeitung, welches Programmcodeanweisungen umfasst, die dazu bestimmt sind, die Ausführung der Schritte des Verfahrens nach einem der Ansprüche 1 bis 4 zu steuern, wenn das Programm von der Vorrichtung nach Anspruch 5 ausgeführt wird.

9. Aufzeichnungsmedium, das von einer Vorrichtung zur Verarbeitung gelesen werden kann und auf dem das Programm nach Anspruch 8 aufgezeichnet ist.

## Claims

1. Method for processing a first request, sent by a first client entity (10), to distribute an item of content, said method comprising the following steps implemented by a processing device (20):
- a first step (F2) of acquiring a location region in which the client entity is located from an address of said entity;
- a second step (F3) of acquiring selection information for at least one selection of a content distribution network from among a plurality of content distribution networks (30-32) made previously for processing a second request, sent by a second client entity located in said location region, to distribute said item of content, said selection information comprising an identifier of the selected distribution network and a time stamp of said previous selection;
- for said acquired network identifier, a step (F4) of determining an item of data representative of a probability of presence of said item of content in a cache memory of said network as a function of the time that has elapsed since the time stamp, said item of data being used to select a distribution network for distributing the item of content to the first client entity.

2. Method according to Claim 1, wherein an identifier of an autonomous system to which the first client entity is attached is acquired in the first acquisition step, and the selection information is acquired for a second client entity attached to said autonomous system.

3. Method according to Claim 1, wherein a weight is associated with each previous selection as a function of the time that has elapsed since said time stamp, said weight varying inversely to that time that has elapsed.

4. Method according to Claim 3, wherein, for each acquired network identifier, said item of data is determined as a function of the weights respectively associated with the previous selections of said acquired network.

5. Device (20) for processing a first request, sent by a first client entity (10), to distribute an item of content, comprising:
- a first acquisition module (102), designed to acquire, from the address of said client entity, a location region;
- a second acquisition module (106), designed to acquire selection information for at least one selection of a content distribution network from among a plurality of content distribution networks (30-32) made previously for processing a second request, sent by a second client entity located in said location region, to distribute said item of content, said selection information comprising an identifier of the selected distribution network and a time stamp of said previous selection;
- a module (104) for determining an item of data representative of a probability of presence of said item of content in a cache memory of a network acquired as a function of the time that has elapsed since the time stamp, said item of data being used to select a distribution network for distributing the item of content to the first client entity.

6. Processing device according to Claim 5, furthermore comprising a selection module designed to select a distribution network for distributing the item of content to the first client entity as a function at least of the determined item of data.

7. Content distribution system (1) designed to distribute an item of content to a first client entity that has requested it, said system comprising:
- a first acquisition module (102), designed to acquire, from the address of said client entity, a location region;
- a second acquisition module (106), designed to acquire selection information for at least one selection of a content distribution network from among a plurality of content distribution networks (30-32) made previously for processing a second request, sent by a second client entity located in said location region, to distribute said item of content, said selection information comprising an identifier of the selected distribution network and a time stamp of said previous selection;
- a module (104) for determining an item of data representative of a probability of presence of said item of content in a cache memory of a network acquired as a function of the time that has elapsed since the time stamp;
- a selection module (220) designed to select a distribution network for distributing the item of content to the first client entity as a function at least of the determined item of data.

8. Program for a processing device, comprising program code instructions intended to command the execution of the steps of the method according to one of Claims 1 to 4 when said program is executed by said device according to Claim 5.

9. Recording medium able to be read by a processing device and on which the program according to Claim 8 is recorded.
